# EUROPEAN PATENT SPECIFICATION

(11) **EP 0 707 531 B1**
(45) Date of publication and mention of the grant of the patent: **16.04.1997**
(21) Application number: 94917748.9
(22) Date of filing: 15.06.1994
(51) Int. Cl.: B29C 35/02, B29C 63/36, F16L 55/165, C08K 9/10

(54) **APPLYING LININGS TO PIPELINES AND PASSAGEWAYS**
ANBRINGEN VON AUSKLEIDUNGEN IN PIPELINES UND LEITUNGEN
APPLICATION D'UN REVETEMENT A DES CONDUITS ET A DES PASSAGES

(30) Priority: 05.07.1993 GB 9313692
(43) Date of publication of application: 24.04.1996
(73) Proprietor: SOUND PIPE LTD, Grand Turk, Turks and Caicos Islands (TC)
(72) Inventor: CHANDLER, Brian, Burnett, A-8933 St Gallen 60 (AT)
(74) Representative: Denmark, James
(86) International application number: GB9401288
(87) International publication number: WO9501860

(56) References cited:
- EP-A- 0 145 654
- EP-A- 0 287 288
- EP-A- 0 551 790
- WO-A-85/04886
- WO-A-87/05376
- WO-A-90/10032
- WO-A-92/20198
- WO-A-92/20504
- CH-A- 676 029
- US-A- 3 607 830
- US-A- 3 618 599
- US-A- 4 768 562
- US-A- 4 876 296
- US-A- 5 186 987

## Description

### BACKGROUND OF THE INVENTION

This invention relates to a method of lining an underground pipeline or passageway according to the precharacterising part of claim 1. The invention is concerned with those linings which are referred to as "soft linings" or "cured in place" linings, which involve at least one resin absorbent layer which is impregnated with a curable synthetic resin. The technology concerning the manufacture and installation of these linings is now well developed, and is based upon original patents of the USA Nos 4009063 and 4064211 to which reference is made for details. The lining tube when the resin is in the uncured state may not strictly be a tube in that it may be a web folded into tubular form so that its edges overlap and such edges become fused or held relatively together only when curing in place has been effected. In fact, this arrangement provides the advantage that the overlapping edges can slip relatively as the tube is being inflated so that the tube will best fit to the passageway surface. This technology has found wide application in the application of these linings to underground sewer pipes, but there are still aspects of this technology in relation to which improvement might be made. Thus, the practised methods involve the impregnation of the lining tubes under factory conditions, and after the tubes have been impregnated, it is desirable that they should be taken to site and put in position over the pipeline or passageway surface as soon as possible so that there is no premature curing of the resin before the lining is put in position. When the lining is in position, it then is desirable that curing should take place as quickly as possible so that the workmen on site can complete the operation in the shortest time and can vacate the site promptly so that there is minimum inconvenience to the general public and to traffic movement, it being mentioned that underground sewer pipes are usually located under and extending in the direction of roads, thoroughfares, highways and the like. Prior Patent Specifications US-A-4,768,562, WO92/20504 and CH-A-676029 all disclose methods wherein the lining tube is applied to the surface to be lined and either the resin impregnating the tube is cured or a polymer layer is fully polymerised. The lining tube in the US patent is part polymerised before use and is stored in this part polymerised condition.

Much attention has been directed therefore to the resin which is used and the curing arrangements, because there is the desirability that the resin should have a long shelf life after application to the lining, so that it will not cure prematurely, and on the other hand should have a short cure time so that when cure finally is initiated, it can be completed as quickly as possible.

In the majority of contracts which are performed using the techniques set forth in said US patents, heat is used for effecting the cure of the resin, and a heat cure resin is used for the impregnation of the lining. Other suggestions in relation to resin technology have been that light cure resin may be used so that initiation of the cure can be effected by shining high intensity light which is Ultra Violet light at the lining when it is in place in the pipeline or passageway. Other suggestions have involved using ferromagnetic particles in the resin so that the resin can be cured selectively by exciting the ferromagnetic particles using a magnetic field, and other arrangements have suggested the use of ultrasonic radiation for; causing the resin to heat up; to cause the rupturing of microcapsules in the resin, such microcapsules including a catalyst and/or promoter to initiate the resin cure; or to cause catalyst and/or promoter to desorb from adsorbent particles in which the said catalyst and/or promoter is adsorbed.

Generally speaking, a solution to the problem has not been satisfactorily discovered, and heat curing is still the most popular method practised.

The problem with heat curing is that it requires the heating up of a large volume of water or other liquid which fills the lining when it is in place on the pipeline or passageway surface. Heating apparatus has to be provided on site in order to heat the water, and generally the use of hot water tends to slow up the curing process.

One disadvantage of the known methods of lining pipelines and passageways specifically as set forth in US Patent No 4,064,211 is that even if heat is not applied to the impregnated lining tube, under ambient conditions the resin will eventually cure in a matter of days and of course if curing takes place before the lining tube is in place on the passageway or pipeline surface, the lining tube is completely lost and must be scrapped. This can represent a considerable loss if not complete loss of profit on a contract. Should the lining tube cure when it is part way inside the pipeline or passageway, then the consequences financially could be disastrous for the contractor. In order to avoid the problem of the resin curing too soon, i.e. before the lining tube is in place, contractors have resorted to extensive measures, in particular to keeping the impregnated tube refrigerated until it is to be used on site. This means that the tubes must be delivered to the site in refrigerated vehicles.

Also, when heat is applied it is applied usually by hot fluent medium e.g. water or steam which fills the inside of the inflated lining tube. If the pipeline is one which constantly carries a fluid or liquid such as sewage the normal flow must be diverted whilst the curing continues. Especially in the case of sewage, this represents a considerable inconvenience and more significantly extra costs which can mean in some cases the loss of contracts to cheaper methods.

Ironically, however, once the tubes have been put in place, it is desirable that the resin should be cured as fast as possible, as the sooner the resin cures, the sooner the contractor can leave the site. It is to be noted that the Contractor will often be given or will often quote a relatively short time for completion of the work, usually undertaken during the night. It is very important therefore that the work be completed in the shortest possible time, especially in these cases where the performance of the work involves the rendering inoperative (as it does in many cases) of a sewerage system or the blocking or obstructing of traffic.

To perform the contract therefore the contractor must on the one hand have a factory or plant at which the tube is impregnated, a vehicle for keeping the impregnated tube refrigerated and on the other hand a vehicle with a heating means for heating the fluid which inflates the tube when in place, in order to effect the curing of the resin, as well as the necessary equipment for putting the tube into place.

There is also the dilemma concerning the resin. On the one hand it is desireable that it should have as long a shelf life as possible to give the contractor plenty of time to place the tube in the pipeline or passageway before curing. On the other hand, when the tube is in place, it is desireable that curing should take place as quickly as possible. Unfortunately this dilemma has proved so far to be insoluble as the additives such as retarders for the resin which can increase shelf life of the resin also increase the cure time of the resin.

Consequently, when a contractor has to perform a contract, he must have the lining tube manufactured, and, immediately before he is to insert the lining tube, he impregnates the tube with the resin, transports it to site (which may be remotely located) as quickly as possible, and inserts the lining tube and cures it as quickly as possible. As soon as the resin is mixed with its catalyst for impregnation of the lining tube, there is a time countdown, and the contractor is racing against time.

The industry is aware of this problem and some attempts have been made to solve it by developing special resins which are curable by light radiation, and examples of such resins are disclosed in European Patent Specification No 0007086, and methods of cured in place lining with impregnated lining tubes using light radiation are disclosed in U.S. Patent No. 4,581,247 and 4,680,066.

Light radiation curable resins however include catalysts which are activatable by the sun's rays and therefore the impregnated lining tubes must be contained in opaque wrappings during storage and transportation to avoid premature curing.

Light radiation curable resin does however have the advantage that Curing of same can be controlled and theoretically the resin has an infinite shelf life. When it comes to curing the in place impregnated tube however, problems arise. Firstly, special ultra violet light sources are needed to cure the resin; secondly, when, as is often the case, the inflating medium is water, that water may be dirty in which case light curing cannot be performed, and in any case waterproof light sources have to be designed and manufactured as no such sources are commercially available. When the flowing liquid in the pipeline or passageway is opaque, as sewage is, it must be diverted and the use of light curing equipment suffers from the same disadvantage in this respect as heating methods. For these reasons, in practice, light curing of in place impregnated lining tubes has not been successful and has not replaced the traditional heating methods.

International Patent Application No. WO-A-95/01861, discloses curable resin systems for the production of rigid articles wherein the resin can be cured readily and quickly, but retains a long to infinite shelf life (e.g. one year or more) making it particularly suitable for use in cured in place lining systems for pipelines and passageways.

As disclosed in said International Application the resin includes or is located adjacent inert matter which is not affected by ambient conditions such as ambient heat and light, but such matter is susceptible to applied radiation to such an extent to cause curing or commencement of curing of the resin.

There are various forms which the said matter can take, and such forms can be used singley or in combination.

In one specific example, the matter comprises microencapsulated shells in which is contained a catalyst for the resin, or a promoter (accelerator) or both, the shells being susceptible to the ultrasonic radiation to rupture the cells to release the catalyst/promoter, and hence cause commencement of the cure.

The micro encapsulation may include the catalyst and/or the promoter (accelerator) or both, but the concept is that the micro encapsulation shells are ruptured in order to release the contents to cause initiation of the cure of the surrounding resin matrix.

As explained in the said co-pending International Patent Application, this initiation system using micro encapsulated substances can be used in conjunction with other initiation systems referred to in the International Application, such as magnetically excitable particles or microwave activatable materials.

An ultrasonic mechanical impactor may be used in order to contact a lining tube which is impregnated with the synthetic resin matrix and the matrix contains the micro encapsulated materials.

The mechanical ultrasonic impacter may be an ultrasonic resonator which is arranged to shoot hardened steel balls at the lining tube. This resonator which is of known type shoots the steel balls without losing hold of the balls, insofar as the balls are held in slots as they are fired ultrasonically so as to impact the lining tube. The impacting of the balls on the lining tube has the effect of rupturing the microcapsules to release the contents thereof to commence the curing of the resin and matrix. The resonator can be used at any stage in the lining process as described in said International Patent Application, and as explained hereinafter, or the resonator can be used in any appropriate circumstances for resin curing. Ultrasonic resonators heretofore have been used for surface hardening of steel pipes.

An object of the present invention is to provide a method whereby the basic methods such as set forth in US Patents Nos 4009063 and 4064211 of applying linings to underground pipelines and passageways can be enhanced by the means in which curing is effected, rendering installation quicker and, by the use of appropriate resin formulation enabling the use of pre-impregnated lining tubes.

According to the present invention there is provided a method of lining an underground pipeline or passageway, wherein a liner tube which is flexible, is sized to the pipeline or passageway to be lined, is impregnated with a curable synthetic resin in uncured state, and is placed on the pipeline or passageway surface by fluid pressure to line same, and the resin subsequently cures hard providing a rigid lining pipe on the pipeline or passageway surface, wherein the resin is of a type or formulation so that cure thereof can be initiated by a cure initiation step such as heat, impact, vibration, radiation or any combination of such steps, comprising the step of feeding the liner tube from ground level into the pipeline or passageway, characterised in that as the liner tube is being fed from ground level into the pipeline or passageway it is passed through a device which subjects the lining tube to said cure initiation step and the liner tube is placed on the pipeline or passageway surface after said cure initiation but before completion of the cure.

The advantages which follow are that the cure initiation device can be much smaller, and can be much more easily controlled and examined and repaired, because suitably it can be located above ground. High intensity of cure initiation can be effected also, whether this be by heat, light or radiation or ultrasonic.

Installers have not previously addressed the matter of initiating cure as the lining is moved underground but rather have stuck to traditional methods which involve placing the lining on the pipeline or passageway surface and then taking steps to initiate the cure. The technology of installing the linings has now developed so far and has now become so efficient that the installer can more or less be sure that he will be able to install the lining within a preset time, and therefore there should be no difficulty in calculating that time and deciding when to initiate the cure and how to initiate the cure by a device preferably located above ground. The installation time should be capable of significant reduction which will represent a tremendous advantage to installers because the sooner the installation has been completed, the sooner expensive labour can be removed from the site and deployed in other areas.

Typically, the lining as it is fed from the ground level into the pipeline or passageway (and typically it will be everted into the pipeline or passageway) passes through a device which is cure initiating, such as a heating ring or ultrasonic vibrator or mechanical impactor, depending upon the resin which is used for the system.

Should it be desired, additional curing initiating or completing steps can be performed on the lining when it has been placed on the pipeline or passageway, in accordance with established practise, but it is believed that such additional curing initiation or effecting will be much reduced compared to curing only after installation.

Where heating is used for initiating cure above ground, the heating means may be specially designed, and may comprise for example hot rollers or other heating means which is a different approach from using hot water in accordance with the established method.

Embodiments of the invention will now be described, by way of example, with reference to the accompanying diagrammatic drawings, wherein:-
Fig. 1 is a sectional side elevation showing a lining operation in progress, the operation being for the application of a flexible lining tube to an underground passage;
Fig. 2 is an enlarged sectional elevation of the lining tube which is adopted for the process of Fig. 1;
Fig. 3 is a perspective view illustrating how the lining tube is everted into position in the pipeline or passageway; and
Fig. 4 is a view similar to Fig. 2 but showing the use of a sonic generator to desorb catalyst and/or promoter to cure the resin.

The first embodiment which is described herein uses microcapsules and it is to be mentioned at this time that the materials which are used i.e. the resins, micro capsules, lining tube materials, may be as described in the said copending International Patent Application to which reference is made, and/or as described in U.K. Patents 1,340,068 and 1,449,445 to which reference is also made.

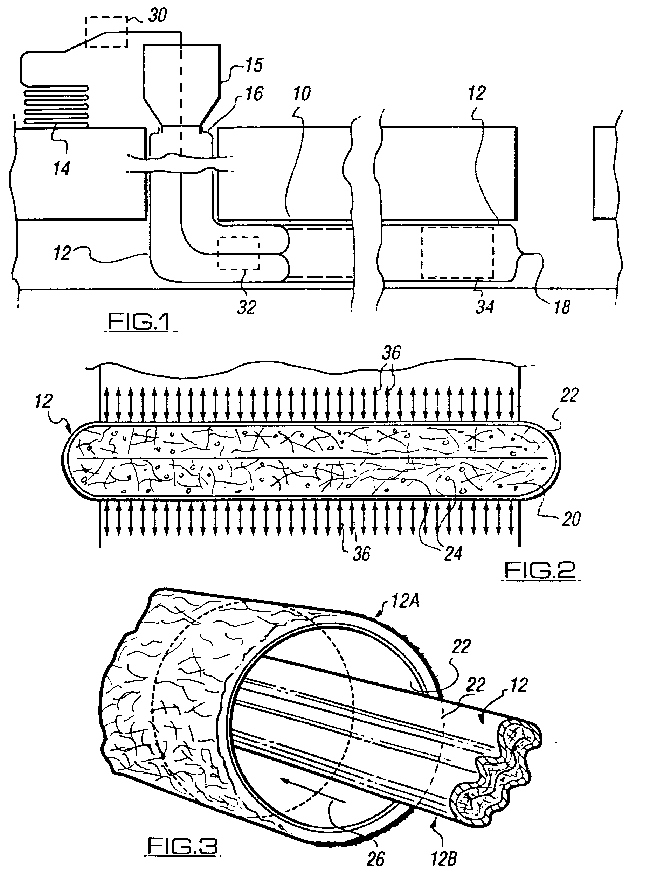

Referring to Fig. 1, an underground passageway in the form of a sewer pipe 10 is being lined by means of a flexible tube 12 supplied from a supply 14 of such tube. The tube is delivered and everted into the sewer 10 by means of a pump unit 15 which is of the design construction and function as set forth in International Patent Application WO92/05944 and US Patent 5154936. This unit 14 serves to pump and evert the tube 12 as shown in Fig. 1. A leading end 16 of the tube may be anchored to the outlet of the unit 15.

The right hand portion of Fig. 1 shows the tube 12 fully positioned and it is illustrated as having a closed trailing end 18. To said end 18 there may be attached a hold back rope, cable or the like in order to prevent the end 18 from rupturing under the eversion pressure.

It is convenient now to refer to Fig. 2 which shows the lining tube 12 in greater detail. Tube 12 will be seen to comprise a core section 20 which is made up of one or more layers of an absorbent material such as a fibrous felt or woven fabric or a combination of these materials or other suitable absorbent materials, and surrounding layer 20 is an impermeable layer 22 which typically in the case of the layer 20 being of polyester felt is of polyurethene film which is bonded to the outer layer of the felt 20.

The felt 20 in practise is impregnated with a curable synthetic resin, and also contained in the resin matrix in this example are the micro encapsulated catalyst and/or promoter, the micro capsules being indicated by reference 24 and being shown in enlarged scale for clarity. These capsules will be much smaller, and will be distributed throughout the resin matrix.

In the arrangement of Fig. 2, the tube 12 is shown in its manufactured condition i.e. before application to the sewer surface, and it will be understood that when the tube 12 is everted as shown in Fig. 1, the outer skin or membrane 22 will eventually lie to the inside of the applied tube. This is illustrated more particularly in Fig. 3 which shows the tube 12 in the process of eversion. A portion 12A has been everted, and the felt surface soaked with resin is turned outwardly whilst the membrane 22 is to the inside, whilst the portion 12B is the inwardly travelling portion, in that it moves in the direction of arrow 26 during eversion.

The above described is also set forth in the aforesaid International Patent Application, but in accordance with the present invention illustrated in the drawings, an ultrasonic resonator is used to apply energy to the lining tube 12 whilst it is still in the flexible state in order to rupture the microcapsules 24, and the ultrasonic resonator is applied to the tube at the location 30 which is ahead of the pump unit 15. Optionally, a second resonator 32 may be used on the inwardly travelling portion 12B of the lining tube and/or at 34 which shows that the ultrasonic resonator is applied to the lining tube after it has been everted on to the surface of the sewer 10.

The present invention identifies that the step of initiating the cure, for example using the resonator 30 as shown in Fig. 1, has general application insofar as instead of using a sonic resonator as described, other resin initiating apparatus can be adopted as related to the type of resin system used. Thus, instead of a resonator 30 one might use a heater, or a light source, or a radiation source. Indeed, depending upon the resin composition, these cure initiators may be used in combination. There may for example be some advantage in using a heating device for preheating the lining with the resin system as shown in the accompanying figures insofar as preheating the resin in combination with the rupture of the microcapsules may provide enhanced curing when the lining is placed in the pipeline or passageway so that any additional underground curing device or step is not necessary. The inventive Concept is the effecting of a precuring or curing initiation "kick" prior to the insertion of the lining on the pipeline or passageway surface. It is desirable to avoid having to introduce curing apparatus into the pipeline or passageway where it cannot be seen where it has to be monitored by television camera. If the precuring step of the present invention is sufficient to ensure that full cure will eventually be effected when the lining is placed in position, then best advantage is attained. It is believed certainly that there will be considerable reduction in curing time by adopting the method of the present invention.

Reverting again to the drawings, the ultrasonic resonator as shown in Fig. 2 is designed to apply energy to the lining tube 12 in that the ultrasonic resonator applies energy as indicated by arrows 36 at the lining tube on the membrane surface 22. This energy fractures the micro capsules and releases the catalyst and/or promoter into the resin matrix initiating the cure and therefore this method has all the advantages of delayed and selective curing so that lining tubes can be pre-impregnated with the resin matrix and microcapsules and stored until ready for installation which is a considerable advantage.

An advantage of the ultrasonic resonator is that it can be used under water, and when it is used for example at location 34 it may well be that the lining tube 12 is simultaneously filled with water which serves to inflate the tube.

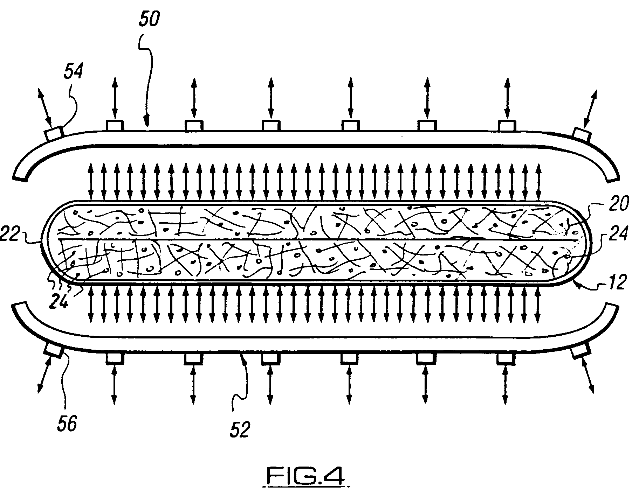

Referring now to Fig. 4, this figure shows the liner tube 12 comprising the inner core 20 and the outer membrane 22, but in this instance, at location 30 in Fig. 1, there is provided a sonic generator apparatus comprising a pair of vibratory plates or other components 50, 52 which in the arrangement shown are configured to follow the contour of the flattened liner tube 12. The plates are provided with transducers 54, 56 which are power driven in order to vibrate the plates. The plates may be vibrated ultrasonically or at audible frequencies, in order to apply the energy to the lining 12, in order to initiate the cure of the resin which impregnates the core 20. In this figure, particles 24 are shown as being embedded in the core 20 and in the resin which impregnates same, but these particles may be for example adsorbent particles which include catalyst and/or promoter or accelerator. It is preferred that the particles be arranged in two groups namely a first group in which the catalyst is adsorbed, and a second group in which the promoter or initiator is adsorbed. The particles of each group may be clay, but the clay of the particles of one group may be different from that of the other group, as this has been found unexpectedly to have beneficial results. The resin may furthermore include an additive which enhances the desorbence of the catalyst and promoter when the lining tube is subjected to the sonic vibration. Such additive preferably comprises sodium hexametaphosphate when the catalyst is dibenzoyl peroxide, which has the effect as described in said International application No. WO95/01861.

The sonic generator exemplified by the plates 50 and 52 may be driven in any convenient manner, and may for example be such that the respective plates 50 and 52 are driven at different frequencies in order to give sonic interference in the vicinity of the lining tube 12 which enhances energy application to the lining tube, and desorbence of the catalyst and promoter. With such desorbence, the cure of the resin which preferably is a polyester resin, is initiated or is "kick started".

As the lining tube 12 travels into the pipeline or passageway as indicated in Fig. 1, the curing time of the resin is selected or controlled so as to be slightly longer than the time it takes to install the liner so that curing will commence more or less immediately after the liner is in position, thereby minimising the time which the operator has to remain on site.

When use is made of an ultrasonic generator for initiating the resin cure, and a sufficient amount of energy is applied, enough heat can be generated in the resin matrix to initiate the cure without any catalyst being required, which represents a considerable advantage. This method may require the use of certain monomers.

Accelerator or promoter may be used or not, as required.

Monomers with a low styrene content may be particularly useful in this regard.

Considerable advantage flows from the present invention as described herein, and the methods of the embodiments described can be used in conjunction with other resin activation methods for example as disclosed in said International Patent Application WO95/01861.

In a further modification, where an epoxy resin is used as the matrix in accordance with a latent cure system as produced by Shell Resin, the curing is triggered by raising the temperature to the order of 80°C, and therefore the micro encapsulated material may be a heat inducing chemical which causes heating up when the capsules are ruptured for example as hereinbefore described. Where a catalyst is encapsulated, this preferably may be an amine.

The resin system employed may include ferrite or the like particles so that heat may be generated in the resin for initiating and/or effecting cure of the resin. In this connection, an alternating magnetic field may be used for the initiating step as described herein. Also, where an additional curing step is required for example by the use of a curing means in the pipeline e.g. at location 32 or 34 in Fig. 1, the step of final curing may be effected by the use of the apparatus which employs a rotor having alternating north and south pole magnets which define magnetic fields of opposite flux direction around the periphery of the rotor so that rotation of the rotor causes the application of an alternative magnetic field throughout the lining thickness and the ferrite particles contained in the lining are thereby heated enhancing the cure. The initiating step may be performed by means of an alternating magnetic field.

## Claims

1. A method of lining an underground pipeline or passageway (10), wherein a liner tube (12) which is flexible, is sized to the pipeline or passageway (10) to be lined, is impregnated with a curable synthetic resin in uncured state, and is placed on the pipeline or passageway surface by fluid pressure to line same, and the resin subsequently cures hard providing a rigid lining pipe on the pipeline or passageway surface, wherein the resin is of a type or formulation so that cure thereof can be initiated by a cure initiation step such as heat, impact, vibration, radiation or any combination of such steps, comprising the step of feeding the liner tube (12) from ground level into the pipeline or passageway (10) characterised in that as the liner tube (12) is being fed from ground level into the pipeline or passageway it is passed through a device (30) which subjects the lining tube to said cure initiation step and the liner tube (12) is placed on the pipeline or passageway surface after said cure initiation but before completion of the cure.

2. The method according to claim 1, characterised in that said cure initiation is performed at ground level, as the liner tube (12) is being fed into the pipeline or passageway (10).

3. The method according to claim 1 or 2, characterised by the step of assisting the cure of the resin after the liner tube (12) has been placed on the pipeline or passageway surface.

4. The method according to any preceding claim, characterised in that the cure initiation step comprises the application of sonic energy and the resin is susceptible to cure initiation by sonic energy.

5. The method according to claim 4, characterised in that the resin includes adsorbent particles containing catalyst and/or promoter which is desorbed under the influence of sonic energy in the ultrasonic and audible range.

6. The method according to claim 5 characterised in that the resin is a polyester resin and the catalyst is benzoylperoxide and the promoter is an amine.

7. The method according to claim 5 or 6, characterised in that the resin includes particles susceptible to magnetic and/or induction radiation.

8. The method according to any of claims 5 to 7 characterised in that the said particles comprise a first group containing the catalyst and a second group containing the promoter.

9. The method according to claim 8, characterised in that the particles of the first group comprises clay particles of a type different from the second group, which are also clay particles.

10. The method according to any one of the preceding claims, characterised in that the cure initiation step includes applying heat to the liner tube (12), and the resin is susceptible to cure initiation by heat energy.

11. The method according to any one of the preceding claims, characterised in that the cure initiation step includes the step of applying light energy to the liner tube and the resin is susceptible to cure initiation by light energy.

12. The method according to any one of the preceding claims, Characterised in that the cure initiation step includes applying mechanical impacts by steel balls to the liner tube, and the resin is susceptible to cure initiation by the mechanical impacts of said steel balls.

## Patentansprüche

1. Verfahren zum Auslegen einer Untergrundpipeline oder eines Untergrundkanals (10), bei dem ein flexibles Futterrohr (12) auf die Größe des/der auszukleidenden Pipeline bzw. Kanals (10) zugeschnitten, mit einem aushärtbaren Kunstharz im unausgehärteten Zustand imprägniert und mit Fluiddruck zum Auskleiden auf die Oberfläche der Pipeline oder des Kanals gelegt wird, worauf der Harz aushärtet und ein festes Futterrohr auf der Oberfläche der Pipeline oder des Kanals bildet, wobei der Harz von einer Art oder Formulierung ist, die es ermöglicht, daß die Aushärtung durch einen Aushärtungseinleitungsschritt wie Erhitzen, Stoß, Vibration, Strahlung oder eine Kombination solcher Schritte eingeleitet werden kann, umfassend den Schritt des Einführens des Futterrohrs (12) vom Boden in die Pipeline bzw. den Kanal (10), dadurch gekennzeichnet, daß beim Einführen des Futterrohrs (12) vom Boden in die Pipeline oder den Kanal dieses durch eine Vorrichtung (30) geleitet wird, die das Futterrohr dem genannten Aushärtungseinleitungsschritt unterzieht, und das Futterrohr (12) nach der genannten Aushärtungseinleitung, aber vor vollendeter Aushärtung auf die Oberfläche der Pipeline oder des Kanals gelegt wird.

2. Verfahren nach Anspruch 1, dadurch gekennzeichnet, daß die genannte Aushärtungseinleitung auf Bodenhöhe durchgeführt wird, während das Futterrohr (12) in die Pipeline bzw. den Kanal (10) eingeführt wird.

3. Verfahren nach Anspruch 1 oder 2, gekennzeichnet durch den Schritt des Unterstützens der Aushärtung des Harzes, nachdem das Futterrohr (12) auf die Oberfläche der Pipeline oder des Kanals gelegt wurde.

4. Verfahren nach einem der vorherigen Ansprüche, dadurch gekennzeichnet, daß der Aushärtungseinleitungsschritt die Beaufschlagung von Beschallungsenergie umfaßt und der Harz auf eine Aushärtungseinleitung durch Beschallungsenergie reagiert.

5. Verfahren nach Anspruch 4, dadurch gekennzeichnet, daß der Harz adsorptionsfähige Partikel beinhaltet, die einen Katalysator und/oder einen Promotor enthalten, der unter dem Einfluß von Beschallungsenergie im Ultraschallbereich und im hörbaren Bereich desorbiert wird.

6. Verfahren nach Anspruch 5, dadurch gekennzeichnet, daß der Harz ein Polyesterharz und der Katalysator Benzoylperoxid und der Promotor ein Amin ist.

7. Verfahren nach Anspruch 5 oder 6, dadurch gekennzeichnet, daß der Harz Partikel beinhaltet, die auf Magnet- und/oder Induktionsstrahlung reagieren.

8. Verfahren nach einem der Ansprüche 5 bis 7, dadurch gekennzeichnet, daß die genannten Partikel eine erste Gruppe umfassen, die den Katalysator enthält, und eine zweite Gruppe, die den Promotor enthält.

9. Verfahren nach Anspruch 8, dadurch gekennzeichnet, daß die Partikel der ersten Gruppe Tonpartikel einer anderen Art enthält als die zweite Gruppe, die ebenfalls Tonpartikel enthält.

10. Verfahren nach einem der vorherigen Ansprüche, dadurch gekennzeichnet, daß der Aushärtungseinleitungsschritt die Anwendung von Wärme auf das Futterrohr (12) beinhaltet und der Harz auf eine Aushärtungseinleitung durch Wärmeenergie reagiert.

11. Verfahren nach einem der vorherigen Ansprüche, dadurch gekennzeichnet, daß der Aushärtungseinleitungsschritt den Schritt des Aufbringens von Lichtenergie auf das Futterrohr beinhaltet und der Harz auf eine Aushärtungseinleitung durch Lichtenergie reagiert.

12. Verfahren nach einem der vorherigen Ansprüche, dadurch gekennzeichnet, daß der Aushärtungseinleitungsschritt die Anwendung mechanischer Stöße durch Stahlkugeln auf das Futterrohr beinhaltet und der Harz auf eine Aushärtungseinleitung durch die mechanischen Stöße der genannten Stahlkugeln reagiert.

## Revendications

1. Une méthode de garnissage d'une canalisation ou d'un passage souterrain (10), dans laquelle un tube de garnissage (12) qui est souple, est dimensionné en fonction de la canalisation ou du passage (10) à garnir, est imprégné d'une résine synthétique durcissable à l'état inerte et est placé sur la surface de la canalisation ou du passage par pression liquide afin de garnir ce dernier ou cette dernière, et la résine devient dure ultérieurement permettant ainsi d'obtenir un tube de garnissage rigide sur la surface de la canalisation ou du passage, dans laquelle la résine est d'un type ou d'une formulation telle que son durcissement peut être amorcé par une phase de déclenchement du durcissement, par exemple chaleur, impact, vibration, radiation ou une combinaison quelconque de ces phases, comprenant la phase consistant à passer le tube de garnissage (12) du niveau du sol dans la canalisation ou le passage (10) caractérisée en ce que au moment où le tube de garnissage (12) est acheminé du niveau du sol dans la canalisation ou le passage, il passe par un dispositif (30) qui soumet le tube de garnissage à ladite phase de déclenchement du durcissement et le tube de garnissage (12) est placé sur la surface de la canalisation ou du passage après ledit déclenchement du durcissement, mais avant que le durcissement ne soit terminé.

2. La méthode, selon les stipulations de la revendication 1, caractérisée en ce que ledit déclenchement du durcissement est effectué au niveau du sol, au moment où le tube de garnissage (12) est acheminé dans la canalisation ou le passage (10).

3. La méthode, selon les stipulations de la revendication 1 ou 2, caractérisée par l'étape consistant à faciliter le durcissement de la résine une fois que le tube de garnissage (12) a été placé sur la surface de la canalisation ou du passage.

4. La méthode, selon les stipulations de l'une quelconque des revendications précédentes, caractérisée en ce que la phase de déclenchement du durcissement comprend l'utilisation de l'énergie sonique et la résine est sensible au déclenchement du durcissement par l'énergie sonique.

5. La méthode, selon les stipulations de la revendication 4, caractérisée en ce que la résine comporte des particules adsorbantes contenant un catalyseur et/ou un activeur qui est désorbé sous l'influence de l'énergie sonique dans la gamme audible et ultrasonique.

6. La méthode, selon les stipulations de la revendication 5, caractérisée en ce que la résine est une résine polyester et le catalyseur est du benzylpéroxyde et l'activeur une substance amine.

7. La méthode, selon les stipulations de la revendication 5 ou 6, caractérisée en ce que la résine comporte des particules sensibles au rayonnement magnétique et/ou par induction.

8. La méthode, selon les stipulations de l'une quelconque des revendications 5 à 7, caractérisée en ce que lesdites particules comprennent un premier groupe contenant le catalyseur et un deuxième groupe contenant l'activeur.

9. La méthode, selon les stipulations de la revendication 8, caractérisée en ce que les particules du premier comprennent des particules d'argile d'un type différent du deuxième groupe, qui sont également des particules d'argile.

10. La méthode, selon les stipulations de l'une quelconque des revendications précédentes, caractérisée en ce que la phase de déclenchement du durcissement comprend l'application de la chaleur sur le tube de garnissage (12) et la résine est sensible au déclenchement du durcissement par l'énergie thermique.

11. La méthode, selon les stipulations de l'une quelconque des revendications précédentes, caractérisée en ce que la phase de déclenchement du durcissement comprend la phase de l'application d'une énergie lumineuse sur le tube de garnissage et la résine est sensible au déclenchement du durcissement par l'énergie lumineuse.

12. La méthode, selon les stipulations de l'une quelconque des revendications précédentes, caractérisée en ce que la phase de déclenchement du durcissement comprend l'application d'impacts mécaniques par des billes d'acier sur le tube de garnissage, et la résine est sensible au déclenchement du durcissement par les impacts mécaniques desdites billes d'acier.
